# EUROPEAN PATENT SPECIFICATION

(11) **EP 1 244 758 B1**
(45) Date of publication and mention of the grant of the patent: **16.03.2005**
(21) Application number: 00966596.9
(22) Date of filing: 15.09.2000
(51) Int. Cl.: C09K 7/06

(54) **EMULSIFIED GELANT**
EMULGIERTES GEL
GEL EMULSIONNE

(30) Priority: 24.09.1999 NO 994692
(43) Date of publication of application: 02.10.2002
(73) Proprietor: IOR Chemco AS, 4067 Stavanger (NO)
(72) Inventor: STAVLAND, Arne, N-4314 Sandnes (NO); NILSSON, Svante, N-4033 Forus (NO)
(74) Representative: Harrison, Michael Charles
(86) International application number: PCT/NO2000/000302
(87) International publication number: WO 2001/021726

(56) References cited:
- US-A- 3 284 393
- US-A- 3 624 019
- US-A- 3 915 920
- US-A- 3 997 492
- US-A- 4 248 304
- US-A- 4 283 507

## Description

The present invention comprises a composition and a process that reduces the water permeability in a subterranean reservoir more than the oil permeability using an emulsified gelant. Further, the present application comprises the use of a composition comprising an aqueous gelant emulsified in oil.

Gels are used in reservoirs to reduce the water cut while maintaining, or even increasing, the oil production from a well.

To obtain a simple and cost effective treatment the gelant should be placed by bullhead injection. In order not to impair the oil production, the gel must have some form of self-selectivity. One method is to use gels that reduces the permeability of water more than that of oil, so called disproportionate permeability reduction (DPR). The use of DPR-gels is limited to shut-off isolated water producing layers or to coning situations. (SPE 50983, Disproportionate Permeability reduction is Not a Panacea, Stavland et al. 1998.)

It was demonstrated in "Mechanistic Study of Disproportionate Permeability Reduction", SPE/DOE 39635 (Nilsson, S., Stavland, A. and Jonsbråten, H.C.) that the DPR effects is controlled by the core wettability and the gelant saturation in the core. The best DPR- effects have been found to occur in fractional wet media. To obtain a good DPR-effect, i.e. preserving the oil permeability and reduce the water permeability, it is important to preserve oil continuos channels. In homogeneous wetting media, oil continuos channels are easier to obtain in a oil wet media than in a water wet. In a water wet media aqueous gelants tend to block narrow passages and especially pore throats with the result that also small amounts of gel gives rise to strong permeability reductions for both phases.

Apart from the wettability of the core material, which is determined by the reservoir and cannot be changed much, another important parameter is the gelant volume fraction, which is comprised, in the present invention. Little can be done in practice with the wettability leaving the gelant saturation during placement as the operational variable. The volume fraction of the gel can be varied in two different methods. One method is direct injection of the gelant at residual oil saturation, Sₒᵣ, so that the gelant occupies the entire aqueous volume and that the gel then shrinks by synerising water. Another possible method is to inject gelant together with oil. Coinjection of gelant and oil is found to be successful. The important parameter is the oil saturation in the core during placement. It is important to realise that the saturation in the core is a function of both the relative permeability curves and the oil/gelant ratio during placement. The saturation in the core is not the same as the saturation in the injected stream, which is a disadvantage for practical applications since reliable relative permeability curves are not always available. The disadvantage with coinjection is that it is easy to carry out in the laboratory, but very difficult to do in the field.

The present invention describes the mechanisms of DPR-gels and how DPR-gels can be optimised. Further on the present invention comprise DPR gels which reduce the permeability of water with little or no impact on the oil permeability. One important motivation for developing DPR gels is more simple and cost effective implementation, i.e., by bullhead injection, but it is important to optimise the use of DPR gel systems.

To optimise the DPR effect it is important to place the gel at oil saturation higher than the residual. The present invention comprises injection of a gelant as an emulsion dispersed in oil. When gelant is emulsified in oil, it can be treated and pumped as a pseudo one-component system. The emulsion should not be too stable and preferably break spontaneously within a couple of hours.

The present application comprises a composition and a process for reducing the water permeability more than the oil permeability in a subterranean reservoir, which composition comprises an aqueous gelant emulsified in oil. The gelant in the present invention comprises water soluble polymers, preferably polyacrylamides, polyacrylate copolymers or biopolymers which is present in a concentration sufficient to give a stable gel after crosslinking, usually in the concentration range of form 1000 to 50000 ppm, more preferably in the concentration range of from 2000 to 10000 ppm. The composition and process according to the invention also include one or several crosslinking agents which is hexamethylenetetramine and/or salicyl alcohol and/or trivalent metal ions preferably chromium or aluminium. The crosslinking agents are present in a concentration range of from 50-5000 ppm, preferably In a concentration range of from 100-1000 ppm. The emulsion of the present invention is stabilised by a surfactant, preferably an oil soluble surfactant. which is present in a concentration range of from 0.05 to 10%, preferably in the range of from 0.1 to 2%. The emulsion of the invention is not too stable and breaks in 1-15 hours at a temperature of from 50-130°C. The emulsion can be considered as a pseudo one-component system. Another important feature of the emulsion is that it breaks spontaneously before a gel is formed. The use of a composition comprising an aqueous gelant emulsified in oil for reducing the water permeability more than the oil permeability in a subterranean reservoir is also described in the present invention. The gelant concentration in the emulsion is in the range up to 50 volume%, preferably in the range of 5-50%, and the gelant emulsified in oil comprises water soluble polymers, preferably polyacrylamides, polyacrylate copolymers or biopolymers.

The composition, the process and the use according to the invention are defined in claims 1, 19 and 37 respectively. Preferred features of the invention are defined in subclaims appended thereto. An emulsified gelant is prepared by taking a water based polymer and cross linker dissolved in brine. The gelant is then emulsified in oil with an added surfactant as emulsion stabiliser. An example of an emulsified gelant is as follows. The gelant used here was HE 300 /HMTA/salicylalcohol in lsopar oil added an oil soluble surfactant as emulsion stabiliser but any aqueous gelant could have been used. The emulsion breaks in a couple of hours at 90°C, and before gel is formed. The gel formed does not synerese. We are now able to tailoring the selectivity only by the gelant concentration in the oil.

Emulsified gelants has been found to be useful as DPR systems. The permeability reduction for both oil and water follows a simple, in fact almost linear, relation as a function of saturation in the core after placement. Emulsified systems are easier to handle and predict than the previously evaluated coinjection of oil and gelant. (Nilsson, S., Stavland, A. and Jonsbråten, H.C.: "Mechanistic Study of disproportionate Permeability Reduction", SPE/DOE 39635.

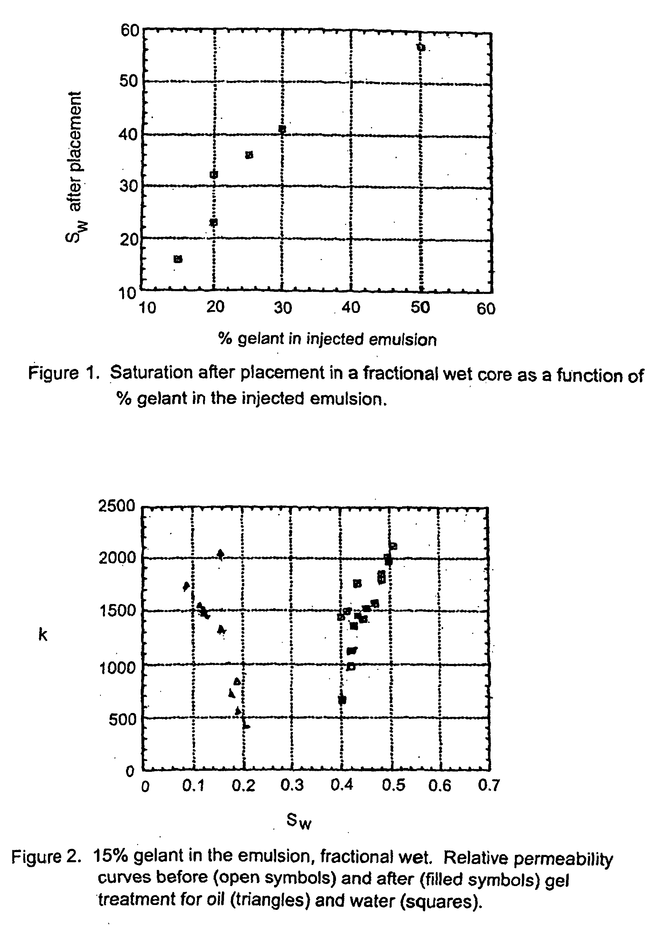

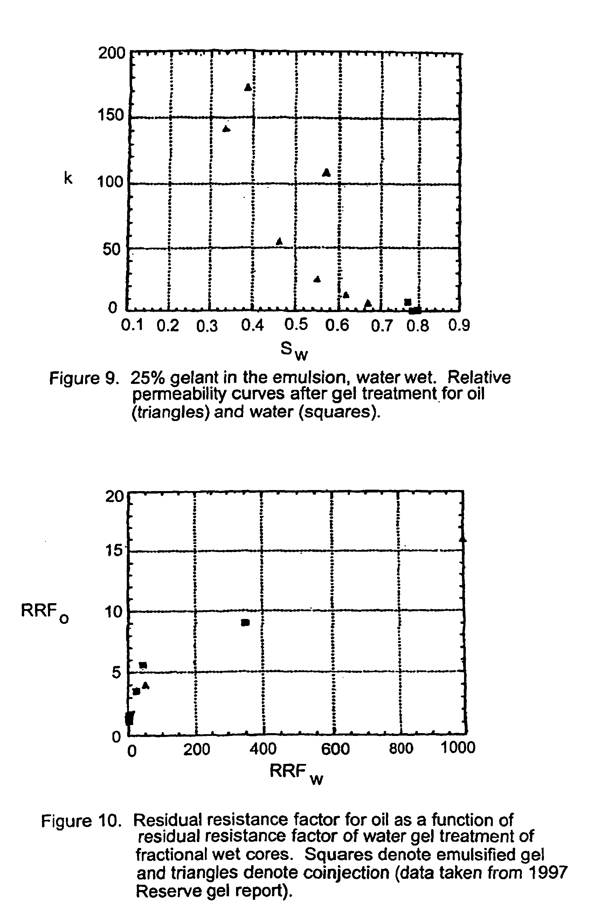

From the experimental result concerning the emulsified gelant systems, the emulsified gelants behave effectively as a pseudo one-component system. The saturation in the core becomes approximately the same as the gelant content in the emulsion (figure 1). The efficiency of the emulsion in terms of selectivity is quite similar to the previously investigated coinjection of gelant and emulsion if the comparison is made in terms of residual resistance factors (figure 10).

The gelant saturation in the core and the gelant saturation in the emulsion are not exactly the same and the deviation has been in the range 1 - 12% units for the fractional wet cores. If emulsions could be considered as perfect pseudo one-component systems there should have been no deviations at all.

In water wet media the permeability reduction was much stronger, when using a gelant with the saturation of gelant in the oil (25%) since an aqueous gelant in a water wet media blocks narrow passages like pore throats. With the present invention it is important to notice that it is possible to obtain a measurable permeability reduction instead of a complete blocking. The reason is that the oil (in the emulsion) helps to keep some channels open so that it is possible for oil to flow through the core without first having to break the gel mechanically.

An important difference between water wet and fractional wet media in the present application is that the saturation in the core after placement differed significantly from the saturation in the emulsion. The saturation in the water wet core after placement was 58% as compared to 25% in the emulsion. In fractional wet cores the difference is much less and about 1 - 12 %. This shows that the core material "traps" the wetting fluid.

Figure 1 shows saturation after placement in a fractional wet core as a function of % gelant in the injected emulsion.

Figures 2-9 shows relative permeability curves before and after gel treatment for oil and water.

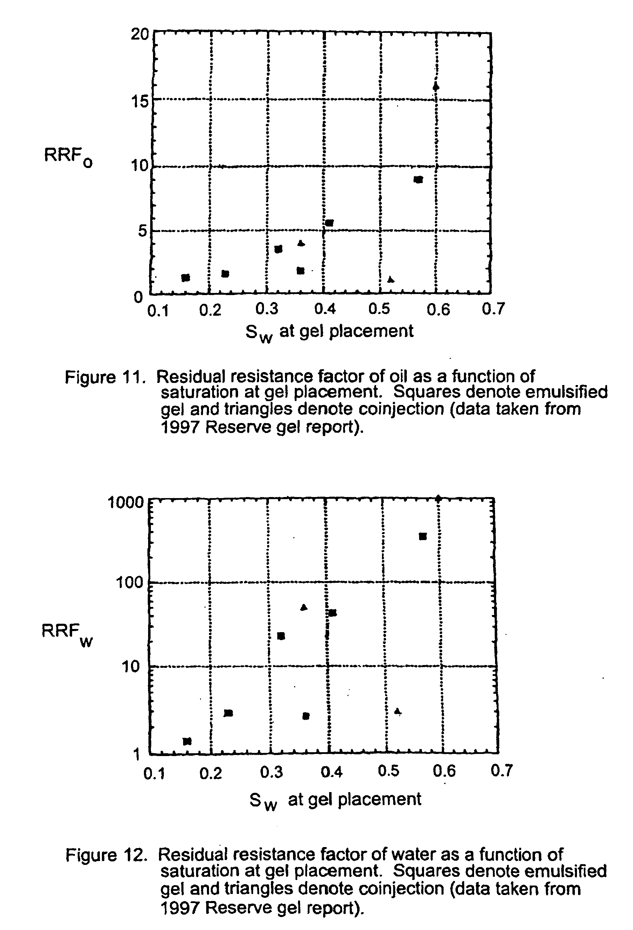

Figures 10-12 shows residual resistance factor for oil as a function of residual resistance factor of water after gel treatment of fractional wet cores.

### Examples

### Experimental arrangement

The chemicals that have been used are:
Synthetic seawater: the composition is as indicated in the table below

**Table 1.**

| Composition of synthetic sea water. | |
|---|---|
| Salt | Conc. (g/litre) |
| NaCl | 24.79 |
| MgCl₂ · 6H₂O | 11.79 |
| CaCl₂ · 2H₂O | 1.60 |
| KCl | 0.80 |
| SrCl₂ · 6H₂O | 0.02 |
| Na₂SO₄ | 4.14 |
| NaHCO₃ | 0.21 |

*Oil:* Isopar H, a high boiling alkane fraction produced by Exxon.
*Gelants:* Waterbased polymer with a corresponding crosslinker giving a suitable gelation time.
*Surfactant:* A surfactant has been used to stabilise the emulsified gelants in oil.

Flooding experiments in sand-packs were carried out in 2 cm diameter columns with a length of ca 30 cm. Coarse glass filters (por 1) were mounted at the inlet and outlet. The pressure ports on the columns were 25 cm apart and about 2.5 cm from the ends. Two different types of sand have been used. Acid cleaned quartz sand, 50-75 µm particle size, which is water wetting, and Teflon powder which is oil wetting. The Teflon powder was delivered by Avocado Research Chemicals and was in the form of small granules with internal pores.

Two different system were used to pack the columns:
1. Mixture of quartz sand and Teflon powder, 50/50 by volume, referred to as fractional wet
2. Quartz sand only, referred to as water-wet
   The cores thus obtained have well defined wettability properties, fractional wet and water-wet. The permeabilities was about 2000 mD before gel treatment and porosities about 45-55%. The permeabilities to brine (synthetic sea water) and oil before and after gel injection were measured at room temperature by the following procedure:

1. The column was first saturated by oil.
2. Water was injected at low flow rate, 0.5 ml/min, until no more oil was produced and the water saturation (S_{w}) and permeability of water (k_{w}) were measured.
3. The injection rate of water was increased step wise and S_{w} and k_{w} were measured at each step at steady state.
4. Oil was injected. S_{w} and the oil permeability (kₒ) were measured in the same way as above.
5. Gelant were injected until steady state was reached.
6. The cores were shut in for 3 days at 90°C.
7. The cores were taken out to room temperature and water was injected at low rate 0.1 ml/min, S_{w} and water permeability after gel treatment (k_{w,gel}) were measured, the injection rate of water was increased step wise and S_{w} and k_{w,gel} were measured at each step at steady state.
8. Oil was injected. S_{w} and oil permeability after gel treatment (k_{o,gel}) were measured in the same way as above.
9. Occasionally water was injected again and S_{w} and k_{w,gel} were measured as above to check for gel stability.

The residual resistance factors (RRF) and tables that are quoted in the present application are the ratios between the endpoint permeabilities taken before and after gel treatment.

The tables 4-10 demonstrate data which is common to all core floods at the following conditions:
Length between pressure ports 25.1 cm, dead volume 1.74 ml. Area 3.14 cm², total length ca 30 cm, viscosity of water 1 cP and oil 1.15cP.
Units used in the table are psi for the pressure (DP), ml/min for the flow rate, produced volumes of oil and water in cumulative ml.

### Example 1 - Emulsified gelant

In the work from 1997 of Nilsson, S., Stavland, A. and Jonsbråten, H.C.: "Mechanistic Study of Disproportionate Permeability Reduction", SPE/DOE 39635 it was found that useful DPR effects, i.e. preserving the oil permeability as much as possible and at the same time reduce the water permeability, could be obtained by coinjecting oil and gelant. The important parameter is the oil saturation in the core during placement. The purpose of this activity is to evaluate weather or not these problems can be circumvented by injecting the gelant as an emulsion. When gelant is emulsified in oil it can be treated and pumped as a pseudo one-component system.

A non-emulsified gelant, 100% gelant and no oil, is included as a comparison below.

Recipe and properties of emulsified gelant.

The gelant used in all the emulsion experiments was HE300 with HMTA and salicylalcohol. The concentration was 5000 ppm HE 300 with 1000 ppm HMTA and 2000 ppm salicylalcohol added as crosslinker. The polymer solution was sheared in a Silverson mixer at 3/4 of maximum speed for 15 minutes.

The gelant (non-emulsified) was found to gel over night at 90°C. There was no gelation at room temperature within one month.
The emulsion was prepared by dispersing the gelant in Isopar and mixing with the Silverson mixer at 3/4 of maximum speed for 5 minutes.

An oil soluble surfactant, was used as an emulsion stabiliser and was found to be adequate, the surfactant concentration was 0.5% in the oil phase. An oil soluble surfactant was selected since these tend to favour oil continuos emulsions. Emulsion viscosity is about 10-20 cp depending on shear and gelant/oil ratio. The viscosity of the polymer solution alone was 10 cp.

The emulsion breaks in a couple of hours at 90°C. At room temperature the emulsion breaks partly and gentle stirring is needed to maintain the system as an emulsion. In bulk samples at 90°C the emulsion breaks before the gel has formed.

### Core flood:

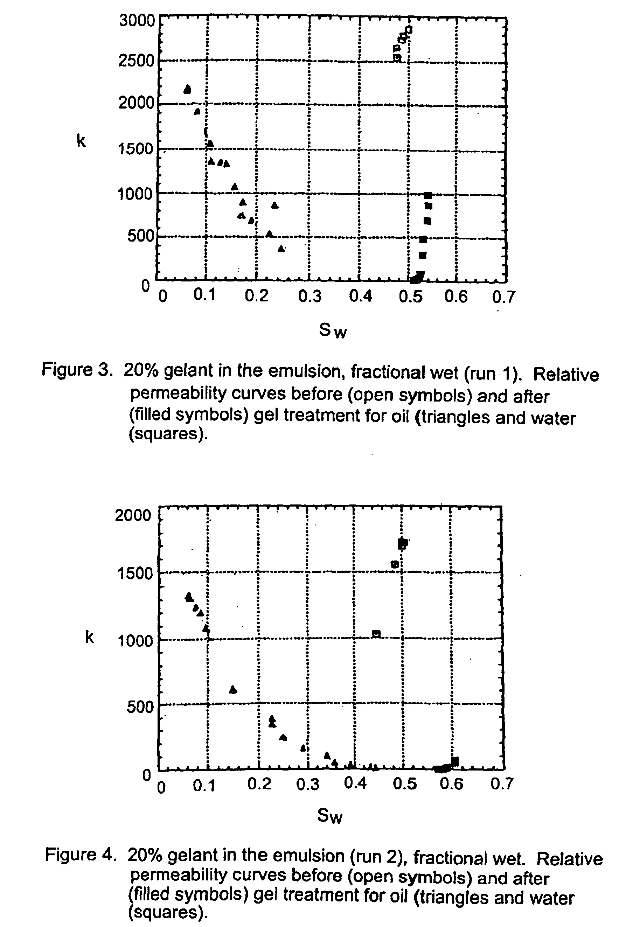

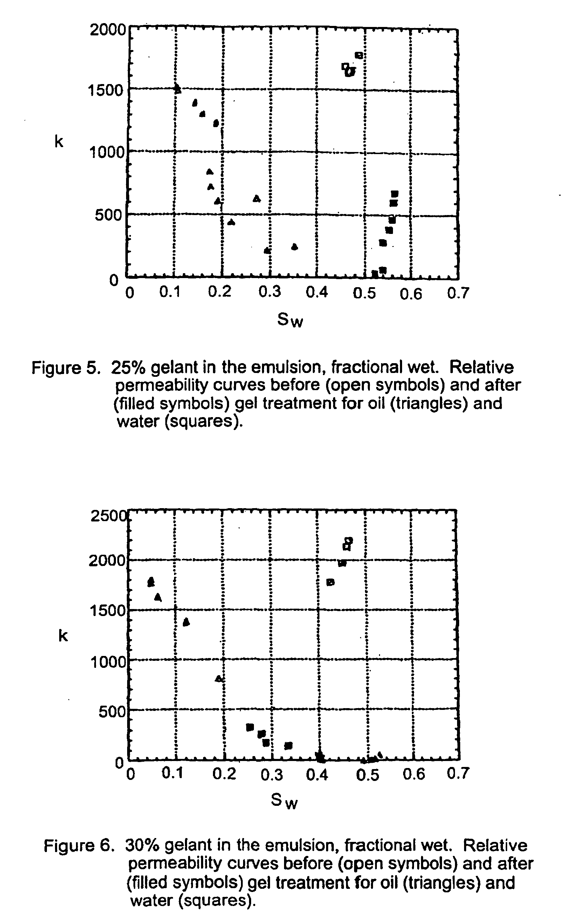

A series of core floods has been carried out using different gelant/oil ratios. The core material has been fractional wetting, quartz/Tefton in most of the core floods. In one of the core floods the packing material was water wet quartz. The results are summarised in tables 2 and figures 1-5. More detailed data on the core floods are given in experimental arrangement.

The emulsions could be injected in the cores without problem and behaved like a one-phase fluid with a viscosity of about 10 cP. The fluid was also produced as an emulsion at the outlet (after breakthrough). It was found that the saturation in the core became somewhat higher but still about the same as the saturation of the injected emulsion (figure 1). The emulsion system is thus a simple way to control the saturation during placement as compared to co-injection of oil and gelant where the relative permeability curves need to be considered. Since the effluent was an emulsion the saturation after placement could not be obtained in the usual way from produced volumes of oil and water. instead a chloride titration was carried out at the very end of the core floods and the saturation was then obtained by calculating backwards from the produced volumes.

With 15% gelant in the emulsion the result was a rather weak permeability reduction with an insignificant selectivity (figure 2). The water flooding after gelation was also stopped at an early stage since it looked as if small gel aggregates were produced from the core. The end point saturation for water may therefore be unrealistically low compared to the other floods. No such indications were observed in the floods with higher gelant contents in the emulsions.

If the gelant concentration in the emulsion is increased the result is a clear disproportionate permeability reduction where the selectivity increases as the overall permeability reduction increases. The highest gelant concentration used was 50%, which resulted in a permeability reduction for water of 350 and a factor of 9.0 for oil. Intermediate gelant concentrations naturally produced intermediate permeability reductions, for instance 20% gelant gave RRF_{w} = 2.9 and RRFₒ = 1.6, in a repeat core flood with 20% gelant the result was RRF_{w} = 23 and RRFₒ = 3.5. The difference between the two experiments can be traced to the fact that the gelant saturation in the core was higher in the repeat experiment, see table 2 and figure 1.

As can be seen in table 2 the use of emulsified gelant gives a considerable protection of the oil permeability as compared to the use non-emulsified gelant (100%).

The relative permeability curves are given in figures 1-9.

**Table 2.**

| Summary on experimental result using emulsified gelant and fractional wet cores. | | | | |
|---|---|---|---|---|
| Gelant content in the emulsions and saturation after plament (S_{w} (gel)) | Residual resistance factors | Selectivity RR_{w}/ RRFₒ | Endpoint permeability for oil/endpoint saturation before and after gel treatment | Endpoint permeability for brine/endpoint saturation before and after gel treatment |
| 15% gelant in emulsion, | RRF_{w} = 1.4 | 1.08 | kₒ = 1745 | k_{w} = 2120 |
| | | | (S_{w} = 0.09) | (S_{w} = 0.51) |
| S_{w} (gel) = 0. 16 | | | | |
| | RRFₒ = 1 .3 | | k_{o,g} = 1324 | k_{w,g} = 1521 |
| | | | (S_{w} = 0.17) | (S_{w} = 0.46) |
| 20% gelant in emulsion (1), | RRF_{w} = 2.89 | 1.80 | kₒ 2182 | k_{w} = 2858 |
| | | | (S_{w} = 0.06) | (S_{w} = 0.50) |
| S_{w} (gel) = 0.23 | RRFₒ = 1.61 | | | |
| | | | k_{o,g} = 1351 | k_{w,g} = 988 |
| | | | (S_{w} = 0.13) | (S_{w} = 0.54) |
| 20% gelant in emulsion (2), | RRF_{w} = 23 | 6.6 | kₒ 1331 | k_{w} = 1725 |
| | | | (S_{w} = 0.06) | (S_{w} = 0.50) |
| S_{w} (gel) = 0.32 | | | | |
| | RRFₒ = 3.5 | | k_{o,g} = 382 | k_{w,g} = 75 |
| | | | (S_{w} = 0.23) | (S_{w} = 0.60) |
| 25% gelant in emulsion, | RRF_{w} = 2.64 | 1.5 | kₒ = 1512 | k_{w} = 1776 |
| | | | (S_{w} = 0.10) | (S_{w} = 0.49) |
| S_{w} (gel) = 0.36 | RRFₒ=1.80 | | | |
| | | | k_{o,g} = 842 | k_{w,g} = 673 |
| | | | (S_{w} = 0. 18) | (S_{w} = 0.56) |
| 30% gelant in emulsion, | RRF_{w} = 43 | 7.68 | kₒ = 1801 | k_{w} = 2199 |
| | | | (S_{w} = 0.05) | (S_{w} = 0.46) |
| S_{w} (gel) = 0.41 | | | | |
| | RRFₒ = 5.6 | | k_{o,g} = 319 | k_{w,g} = 51 |
| | | | (S_{w} = 0.25) | (S_{w} = 0.52) |
| 50% gelant in emulsion, | RRF_{w} = 350 | 39 | kₒ = 1894 | k_{w} = 2317 |
| | | | (S_{w} = 0.09) | (S_{w} = 0.50) |
| S_{w} (gel) = 0.57 | RRFₒ = 9.0 | | | |
| | | | k_{o,g} = 209 | k_{w,g} = 6.6 |
| | | | (S_{w} = 0.34) | (S_{w} = 0.65) |
| 100% gelant (no emulsion), | RRF_{w} = 1000 | 62 | kₒ = 2136 | k_{w} = 2618 |
| | | | (S_{w} = 0.21 ) | (S_{w} = 0.60) |
| S_{w} (gel) = 1 | | | | |
| | RRFₒ = 16 | | k_{o,g} = 132 | k_{w,g} = 2.7 |
| | | | (S_{w} = 0.43) | (S_{w} = 0.63) |

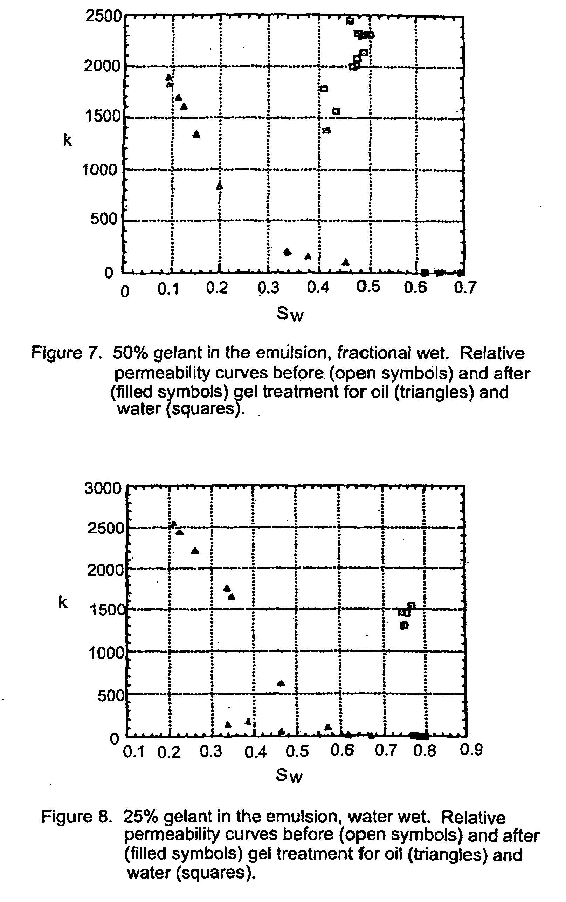

With the water-wet core the permeability reduction was much stronger (figures 8-9 and table 3). A emulsion with 25% gelant gave RRFW = 214 which is almost 100 times more than a 25% emulsion in fractional wet cores. The emulsion system does however give a pronounced DPR effect also in water wet media.

**Table 3.**

| Summary on experimental result using emulsified gelant and a waterwet core. | | | | |
|---|---|---|---|---|
| Gelant content in the emulsions and saturation after plament (S_{w} (gel)) | Residual resistance factors | Selectivity RR_{w}/ RRFₒ | Endpoint permeability for oil/endpoint saturation before and after gel treatment | Endpoint permeability for brine/endpoint saturation before and after gel |
| 25% emulsion, | RRF_{w} =214 | 12 | kₒ = 2548 | treatment |
| S_{w} (gel) = 0.58 | | | (S_{w} = 0.21) | k_{w} = 1539 |
| | RRFₒ = 18 | | k_{o,g}=142 | (S_{w}=0.77) |
| | | | (S_{w} = 0.34) | k_{w,g} = 7.2 |
| | | | | (S_{w} = 0.77) |

**Table 4**

| Exp. 1: Pore volume = 42.79 ml, fractional wet | | | | | |
|---|---|---|---|---|---|
| Inj. S_{w} | Oil prod. | Saturation | DP | Perm. | Rate |
| | 21.9 | 0.47 | 0.8 | 1223 | 0.5 |
| | 23.4 | 0.51 | 1.28 | 1529 | 1 |
| | 24.5 | 0.53 | 2.1 | 1864 | 2 |
| | 24.6 | 0.53 | 4.1 | 1910 | 4 |
| | 24.9 | 0.54 | 6.2 | 1894 | 6 |
| | | | | | |

| Inj. oil | S_{w}- prod. | Saturation | DP | Perm. | Rate |
|---|---|---|---|---|---|
| | 16 | 0.21 | 0.93 | 1210 | 0.5 |
| | 18.1 | 0.16 | 1.52 | 1481 | 1 |
| | 20 | 0.11 | 2.92 | 1542 | 2 |
| | 20.5 | 0.10 | 5.49 | 1640 | 4 |
| | 20.8 | 0.10 | 8.12 | 1663 | 6 |
| | | | | | |

| Inj. S_{w} | Oil prod. | Saturation | DP | Perm. | Rate |
|---|---|---|---|---|---|
| | 19.8 | 0.52 | 1.25 | 1566 | 1 |
| | 20.9 | 0.54 | 2.1 | 1864 | 2 |
| | 21.2 | 0.55 | 4.45 | 1760 | 4 |
| | 21.55 | 0.56 | 6.55 | 1793 | 6 |
| | | | | | |

| | Prod. | | DP | | Rate |
|---|---|---|---|---|---|
| Gelant | 0 | | 2.06 | | 0.23 |
| | | | | | |

| Inj. S_{w} | Oil prod. | Saturation | DP | Perm. | Rate |
|---|---|---|---|---|---|
| | 1.7 | 0.62 | 35 | 0.06 | 0.001 |
| | | | | | |

| Inj. oil | S_{w}- prod. | Saturation | DP | Perm. | Rate |
|---|---|---|---|---|---|
| | 3.5 | 0.49 | 6.27 | 0.72 | 0.002 |
| | 6.3 | 0.43 | 11.3 | 0.80 | 0.004 |
| | 8 | 0.39 | 13.4 | 1.68 | 0.01 |
| | 9 | 0.37 | 20 | 2.25 | 0.02 |
| | 10.4 | 0.33 | 20.5 | 4.39 | 0.04 |
| | 11.6 | 0.31 | 22.5 | 8.00 | 0.08 |
| | 12.1 | 0.29 | 22 | 10.23 | 0.1 |
| | 12.9 | 0.27 | 24.6 | 13.73 | 0.15 |
| | 13.5 | 0.26 | 24.5 | 18.38 | 0.2 |
| | 14.9 | 0.23 | 17.6 | 38.37 | 0.3 |
| | | | | | |

| Inj. S_{w} | Oil prod. | Saturation | DP | Perm. | Rate |
|---|---|---|---|---|---|
| | 15.1 | 0.54 | 41 | 0.10 | 0.002 |

**Table 5**

| Exp. 2: Pore volume = 44.56 ml, fractional wet | | | | | |
|---|---|---|---|---|---|
| Inj. S_{w} | Oil prod. | Saturation | DP | Perm. | Rate |
| | 19.8 | 0.41 | 0.18 | 1088 | 0.1 |
| | 21.7 | 0.45 | 0.75 | 2610 | 1 |
| | 22.1 | 0.46 | 1.59 | 2462 | 2 |
| | 22.5 | 0.47 | 2.89 | 2709 | 4 |
| | 22.8 | 0.47 | 4.3 | 2731 | 6 |
| | | | | | |

| inj. Oil | S_{w}- prod. | Saturation | DP | Perm. | |
|---|---|---|---|---|---|
| | 18.3 | 0.20 | 0.59 | 1908 | 0.5 |
| | 19.4 | 0.18 | 1.12 | 2010 | 1 |
| | 20.1 | 0.16 | 2.19 | 2056 | 2 |
| | 20.9 | 0.14 | 4.19 | 2149 | 4 |
| | 21.5 | 0.13 | 6.13 | 2203 | 6 |
| | | | | | |

| Inj. S_{w} | Oil prod. | Saturation | DP | Perm. | |
|---|---|---|---|---|---|
| | 16.9 | 0.37 | 0.7 | 1398 | 0.5 |
| | 17.8 | 0.39 | 1.05 | 1864 | 1 |
| | 19.4 | 0.43 | 3.33 | 2351 | 4 |
| | 20.3 | 0.45 | 4.31 | 2725 | 6 |
| | | | | | |
| Gelant | | | 13.2 | | 2.3 |
| | | | | | |

| Inj. S_{w} | Oil prod. | Saturation | DP | Perm. | |
|---|---|---|---|---|---|
| | 3.2 | 0.52 | 24.9 | 0.39 | 0.005 |
| | | | | | |

| Inj. Oil | S_{w}- prod. | Saturation | DP | Perm. | |
|---|---|---|---|---|---|
| | 3.4 | 0.48 | 6.3 | 3.6 | 0.01 |
| | 4.5 | 0.46 | 9.67 | 7.0 | 0.03 |
| | 6.8 | 0.41 | 11.52 | 19.5 | 0.1 |
| | 8.7 | 0.36 | 10.98 | 41.0 | 0.2 |
| | 8.9 | 0.36 | 20.99 | 42.9 | 0.4 |
| | 10.7 | 0.32 | 15.96 | 112.8 | 0.8 |

**Table 6**

| 20% emulsion (2), fractional wet: Pore volume = 40.0 | | | | | |
|---|---|---|---|---|---|
| Inj. S_{w} | Oil prod. | Saturation | DP | Perm. | Rate |
| | 19.6 | 0.446 | 0.19 | 1030 | 0.1 |
| | 21.2 | 0.486 | 0.63 | 1554 | 0.5 |
| | 21.75 | 0.500 | 1.13 | 1732 | 1 |
| | 21.75 | 0.500 | 2.31 | 1695 | 2 |
| | 21.8 | 0.501 | 4.56 | 1717 | 4 |
| | 21.9 | 0.504 | 6.81 | 1725 | 6 |
| | | | | | |

| Inj. Oil | S_{w}- prod | Saturation | DP | Perm. | Rate |
|---|---|---|---|---|---|
| | 15.9 | 0.150 | 0.37 | 608 | 0.1 |
| | 18 | 0.097 | 1.04 | 1082 | 0.5 |
| | 18.5 | 0.085 | 1.88 | 1197 | 1 |
| | 18.8 | 0.077 | 3.63 | 1240 | 2 |
| | 19.3 | 0.065 | 6.87 | 1311 | 4 |
| | 19.4 | 0.062 | 10.15 | 1331 | 6 |
| | | | | | |
| Gelant | | | 9.56 | | 1 |
| | | | | | |

| Inj. S_{w} | Oil prod. | Saturation | DP | Perm. | Rate |
|---|---|---|---|---|---|
| | 9.9 | 0.570 | 7.81 | 1.3 | 0.00 |
| | 10.4 | 0.582 | 9.78 | 2.0 | 0.01 |
| | 10.6 | 0.587 | 12.94 | 7.6 | 0.05 |
| | 10.7 | 0.590 | 14.4 | 13.6 | 0.1 |
| | 11.3 | 0.605 | 19.2 | 51.0 | 0.5 |
| | 11.3 | 0.605 | 27.11 | 72.2 | 1 |
| | | | | | |

| Inj. Oil | S_{w}- prod. | Saturation | DP | Perm. | Rate |
|---|---|---|---|---|---|
| | 8.2 | 0.443 | 2.3 | 9.8 | 0.01 |
| | 8.6 | 0.433 | 3.21 | 14.0 | 0.02 |
| | 10.3 | 0.391 | 3.49 | 32.3 | 0.05 |
| | 11.65 | 0.357 | 4.3 | 52.4 | 0.1 |
| | 12.3 | 0.341 | 4.49 | 100.3 | 0.2 |
| | 14.3 | 0.291 | 7.19 | 156.5 | 0.5 |
| | 16 | 0.248 | 9.27 | 242.8 | 1 |
| | 16.9 | 0.226 | 13.2 | 341.1 | 2 |
| | 16.9 | 0.226 | 23.58 | 381.9 | 4 |

**Table 7**

| 25% emulsion, fractional wet: Pore volume = 40.0 | | | | | |
|---|---|---|---|---|---|
| Inj. S_{w} | Oil prod. | Saturation | DP | Perm. | Rate |
| | 21.2 | 0.460 | 0.58 | 1687 | 0.5 |
| | 21.45 | 0.466 | 1.2 | 1631 | 1 |
| | 21.6 | 0.470 | 2.39 | 1638 | 2 |
| | 21.7 | 0.472 | 4.73 | 1655 | 4 |
| | 22.3 | 0.487 | 6.61 | 1776 | 6 |
| | | | | | |

| Inj. Oil | S_{w}- prod. | Saturation | DP | Perm. | Rate |
|---|---|---|---|---|---|
| | 12.6 | 0.271 | 0.36 | 625.3 | 0.1 |
| | 16.1 | 0.188 | 0.91 | 1236 | 0.5 |
| | 17.3 | 0.159 | 1.72 | 1308 | 1 |
| | 18 | 0.143 | 3.23 | 1393 | 2 |
| | 19.5 | 0.107 | 6.05 | 1488 | 4 |
| | 19.7 | 0.103 | 8.93 | 1512 | 6 |
| | | | | | |
| Gelant | | | 9.1 | | 1 |
| | | | | | |

| Inj. Oil | S_{w}- prod. | Saturation | DP | Perm. | Rate |
|---|---|---|---|---|---|
| | 1.2 | 0.353 | 0.93 | 242.1 | 0.1 |
| | | | | | |

| Inj. S_{w} | Oil prod. | Saturation | DP | Perm. | Rate |
|---|---|---|---|---|---|
| | 8.9 | 0.522 | 2.74 | 35.7 | 0.05 |
| | 9.6 | 0.539 | 3.16 | 61.9 | 0.1 |
| | 9.6 | 0.539 | 3.53 | 277.3 | 0.5 |
| | 10.2 | 0.553 | 5.15 | 380.1 | 1 |
| | 10.5 | 0.560 | 8.45 | 463.3 | 2 |
| | 10.6 | 0.562 | 13 | 602.3 | 4 |
| | 10.7 | 0.565 | 17.44 | 673.5 | 6 |
| | | | | | |

| Inj. Oil | S_{w}- prod. | Saturation | DP | Perm. | Rate |
|---|---|---|---|---|---|
| | 13.2 | 0.293 | 1.05 | 214.4 | 0.1 |
| | 16.4 | 0.218 | 2.55 | 441.4 | 0.5 |
| | 17.5 | 0.192 | 3.72 | 605.1 | 1 |
| | 18.1 | 0.177 | 6.24 | 721.5 | 2 |
| | 18.2 | 0.175 | 10.69 | 842.3 | 4 |

**Table 8**

| 30% emulsion, fractional wet: Pore volume = 44.4 | | | | | |
|---|---|---|---|---|---|
| Inj. S_{w} | Oil prod. | Saturation | DP | Perm. | Rate |
| | 20.7 | 0.427 | 0.55 | 1780 | 0.5 |
| | 20.75 | 0.428 | 1.1 | 1780 | 1 |
| | 21.8 | 0.452 | 1.99 | 1967 | 2 |
| | 22.2 | 0.461 | 3.67 | 2134 | 4 |
| | 22.4 | 0.465 | 5.34 | 2199 | 6 |
| | | | | | |

| Inj. Oil | S_{w}- prod. | Saturation | DP | Perm. | Rate |
|---|---|---|---|---|---|
| | 13.95 | 0.190 | 0.28 | 804 | 0.1 |
| | 16.95 | 0.123 | 0.82 | 1373 | 0.5 |
| | 16.95 | 0.123 | 1.62 | 1390 | 1 |
| | 19.5 | 0.065 | 2.76 | 1631 | 2 |
| | 20.2 | 0.050 | 5.1 | 1766 | 4 |
| | 20.2 | 0.050 | 7.5 | 1801 | 6 |
| | | | | | |
| Gelant | | | 7.59 | | 1 |
| | | | | | |

| Inj. Oil | S_{w}- prod. | Saturation | DP | Perm. | Rate |
|---|---|---|---|---|---|
| | 0.4 | 0 | 1.93 | 117 | 0.1 |
| | | | | | |

| Inj. S_{w} | Oil prod. | Saturation | DP | Perm. | Rate |
|---|---|---|---|---|---|
| | 4.9 | 0.406 | 8.28 | 0.5 | 0.00 |
| | 8.65 | 0.490 | 10 | 1.0 | 0.00 |
| | 9.3 | 0.505 | 11.03 | 1.8 | 0.01 |
| | 9.4 | 0.507 | 11.66 | 3.4 | 0.02 |
| | 9.5 | 0.509 | 13.43 | 7.3 | 0.05 |
| | 9.8 | 0.516 | 15.04 | 13.0 | 0.1 |
| | 10.2 | 0.525 | 19.11 | 51.2 | 0.5 |
| | | | | | |

| Inj. Oil | S_{w}- prod. | Saturation | DP | Perm. | Rate |
|---|---|---|---|---|---|
| | 7.2 | 0.402 | 1.97 | 11 | 0.01 |
| | 7.2 | 0.402 | 4.94 | 23 | 0.05 |
| | 7.4 | 0.398 | 5.22 | 43 | 0.1 |
| | 10.2 | 0.334 | 7.93 | 142 | 0.5 |
| | 12.3 | 0.287 | 12.92 | 174 | 1 |
| | 12.7 | 0.278 | 17.54 | 257 | 2 |
| | 13.8 | 0.253 | 28.23 | 319 | 4 |

**Table 9**

| 50% emulsion, fractional wet: Pore volume = 44.77 | | | | | |
|---|---|---|---|---|---|
| Inj. S_{w} | Oil prod. | Saturation | DP | Perm. | Rate |
| | 20.1 | 0.41 | 0.11 | 1780 | 0.1 |
| | 22.4 | 0.46 | 0.4 | 2447 | 0.5 |
| | 23.1 | 0.48 | 0.84 | 2330 | 1 |
| | 23.4 | 0.48 | 1.7 | 2303 | 2 |
| | 23.6 | 0.49 | 3.66 | 2139 | 4 |
| | 24.14 | 0.50 | 5.08 | 2312 | 6 |
| | | | | | |

| Inj. Oil | S_{w}- prod. | Saturation | DP | Perm. | |
|---|---|---|---|---|---|
| | 15.2 | 0.200 | 0.27 | 834 | 0.1 |
| | 17.4 | 0.151 | 0.84 | 1340 | 0.5 |
| | 18.6 | 0.124 | 1.4 | 1608 | 1 |
| | 19.1 | 0.113 | 2.66 | 1693 | 2 |
| | 19.9 | 0.095 | 4.93 | 1826 | 4 |
| | 20.0 | 0.093 | 7.13 | 1894 | 6 |
| | | | | | |

| Inj. S_{w} | Oil prod. | Saturation | DP | Perm. | |
|---|---|---|---|---|---|
| | 14.3 | 0.413 | 0.71 | 1379 | 0.5 |
| | 15.2 | 0.433 | 1.25 | 1566 | 1 |
| | 16.7 | 0.466 | 1.96 | 1997 | 2 |
| | 16.9 | 0.471 | 3.89 | 2013 | 4 |
| | 17.1 | 0.475 | 5.65 | 2079 | 6 |
| | 17.8 | 0.491 | 5.07 | 2317 | 6 |
| | | | | | |
| Gelant | | | 13.3 | | 1 |
| | | | | | |

| Inj. S_{w} | Oil prod. | Saturation | DP | Perm. | |
|---|---|---|---|---|---|
| | 7.4 | 0.60 | 9.24 | 4.24 | 0.02 |
| | 9.4 | 0.65 | 11.8 | 6.64 | 0.04 |
| | | | | | |

| Inj. Oil | S_{w}- prod. | Saturation | DP | Perm. | |
|---|---|---|---|---|---|
| | 10.6 | 0.451 | 2.13 | 106 | 0.1 |
| | 13.9 | 0.377 | 2.85 | 158 | 0.2 |
| | 15.6 | 0.339 | 4.51 | 200 | 0.4 |
| | 15.7 | 0.337 | 6.45 | 209 | 0.6 |
| | | | | | |

| Inj. S_{w} | Oil prod. | Saturation | DP | Perm. | |
|---|---|---|---|---|---|
| | 14.3 | 0.618 | 7.02 | 6.41 | 0.02 |

**Table 10**

| 25% emulsion, water wet: Pore volume = 37.39 | | | | | |
|---|---|---|---|---|---|
| Inj. S_{w} | Oil prod. | Saturation | DP | Perm. | Rate |
| | 29.8 | 0.750 | 0.75 | 1305 | 0.5 |
| | 29.6 | 0.745 | 1.34 | 1460 | 1 |
| | 29.8 | 0.750 | 2.65 | 1477 | 2 |
| | 30 | 0.756 | 5.39 | 1452 | 4 |
| | 30.4 | 0.767 | 7.63 | 1539 | 6 |
| | | | | | |

| Inj. Oil | S_{w}- prod. | Saturation | DP | Perm. | Rate |
|---|---|---|---|---|---|
| | 13.1 | 0.464 | 0.36 | 625.3 | 0.1 |
| | 17.4 | 0.349 | 0.68 | 1655 | 0.5 |
| | 17.8 | 0.338 | 1.28 | 1758 | 1 |
| | 20.7 | 0.261 | 2.03 | 2217 | 2 |
| | 22.1 | 0.223 | 3.68 | 2446 | 4 |
| | 22.6 | 0.210 | 5.3 | 2548 | 6 |
| | | | | | |
| Gelant | | 0.584 | 5.61 | | 1 |
| | | | | | |

| Inj. Oil | S_{w}- prod. | Saturation | DP | Perm. | Rate |
|---|---|---|---|---|---|
| | 2.2 | 0.571 | 2.07 | 108.8 | 0.1 |
| | | | | | |

| Inj. S_{w} | Oil prod. | Saturation | DP | Perm. | Rate |
|---|---|---|---|---|---|
| | 9.7 | 0.784 | 20.73 | 0.378 | 0.004 |
| | 10.2 | 0.798 | 23.21 | 0.843 | 0.01 |
| | | | | | |

| Inj. Oil | S_{w}- prod. | Saturation | DP | Perm. | Rate |
|---|---|---|---|---|---|
| | 6.6 | 0.668 | 3.62 | 6.2 | 0.01 |
| | 8.5 | 0.617 | 3.54 | 12.7 | 0.02 |
| | 11 | 0.550 | 4.4 | 25.6 | 0.05 |
| | 14.2 | 0.464 | 4.12 | 54.6 | 0.1 |
| | 17.1 | 0.387 | 6.53 | 172.4 | 0.5 |
| | 18.9 | 0.339 | 15.83 | 142.2 | 1 |
| | | | | | |

| Inj. S_{w} | Oil prod. | Saturation | DP | Perm. | Rate |
|---|---|---|---|---|---|
| | 17.9 | 0.771 | 27.2 | 7.20 | 0.1 |

## Claims

1. Composition for reducing water permeability more than oil permeability in a subterranean reservoir, which composition comprises an aqueous gelant emulsified in oil, wherein said aqueous gelant comprises a polymer and one or several crosslinking agents.

2. Composition according to claim 1, wherein the gelant concentration in the emulsion is in the range up to 50 volume%.

3. Composition according to claim 1 or 2, wherein the gelant concentration in the emulsion is in the range above 5 volume%.

4. Composition according to any one of the preceding claims 1-3, wherein the gelant comprises water soluble polymers.

5. Composition according to any one of the preceding claims 1-4, wherein said water soluble polymers comprise polyacrylamides, polyacrylate copolymers or biopolymers.

6. Composition according to any one of the preceding claims 1-5, wherein the polymer concentration in the gelant is present in a concentration sufficient to give a stable gel after crosslinking.

7. Composition according to claim 6, wherein said polymer concentration in the gelant is present in a concentration range of from 1000 to 50000 ppm

8. Composition according to claim 7, wherein said polymer concentration in the gelant is present in a concentration range of from 2000 to 10000 ppm.

9. Composition according to any one of the preceding claims 1-8, wherein the crosslinking agents are hexamethylenetetramine and/or salicyl alcohol and/or trivalent metal ions.

10. Composition according to claim 9, wherein the trivalent metal ions are chromium or aluminium.

11. Composition according to any one of the preceding claims 1-10, wherein said one or several crosslinking agents is present in a concentration range of from 50-5000 ppm.

12. Composition according to claim 11, wherein said one or several crosslinking agents is present in a concentration range of from 100-1000 ppm.

13. Composition according to any one of the preceding claims 1-12, wherein the emulsion is stabilised by a surfactant.

14. Composition according to claim 13, wherein said surfactant is an oil soluble surfactant.

15. Composition according to claim 13 or 14, wherein said surfactant is present in a concentration range of from 0.05 to 10%.

16. Composition according to claim 15, wherein said surfactant is present in a concentration range of from 0.1 to 2%.

17. Composition according to any one of the preceding claims 1-16, wherein the emulsion breaks in 1-15 hours at a temperature of from 50-130°C.

18. Composition according to any one of the preceding claims 1-16, wherein a gel is formed after the emulsion breaks.

19. Process for reducing the water permeability more than the oil permeability in a subterranean reservoir, wherein an aqueous gelant emulsified in oil is injected into a reservoir.

20. Process according to claim 19, wherein the gelant concentration in the emulsion is in the range up to 50 volume%.

21. Process according to claim 20, wherein the gelant concentration in the emulsion is in the range above 5-volume%.

22. Process according to any one of the preceding claims 19-21, wherein the gelant emulsified in oil comprises water-soluble polymers.

23. Process according to claim 22, wherein said water-soluble polymers comprise polyacrylamides, polyacrylate copolymers or biopolymers.

24. Process according to any one of the preceding claims 19-23, wherein the polymer concentration in the gelant emulsified in oil is present in the concentration sufficient to give a stable gel after crosslinking.

25. Process according to claim 24, wherein said polymer concentration in the gelant emulsified in oil is present in the concentration range of from 1000 to 50000 ppm.

26. Process according to claim 24 or 25, wherein said polymer concentration in the gelant emulsified in oil is present in the concentration range of from 2000 to 10000 ppm

27. Process according to claim 19-26, wherein said gelant comprises one or several crosslinking agents comprising hexamethylenetetramine and/or salicyl alcohol, and/or trivalent metal ions.

28. Process according to claim 27, wherein said trivalent metal ions are chromium or aluminium.

29. Process according to any one of the previous claims 19-28, wherein one or several crosslinking agents are present in the range of from 50 - 5000 ppm.

30. Process according to claim 28, wherein one or several crosslinking agents are present in the concentration range of from 100-1000 ppm.

31. Process according to claim 19-30, wherein the emulsion is stabilised by a surfactant.

32. Process according to claim 31, wherein said surfactant is an oil-soluble surfactant.

33. Process according to any one of the previous claims 31-32, wherein said surfactant is present in a concentration range of from 0.05 to 10%.

34. Process according to claim 33, wherein said surfactant is present in a concentration range of from 0.1 to 2%.

35. Process according to any one of the previous claims 19-34, wherein the emulsion breaks in 1-15 hours at a temperature of 50 - 130°C.

36. Process according to any one of the previous claims 19-34, wherein a gel is formed before the emulsion breaks.

37. Use of a composition comprising an aqueous gelant emulsified in oil for reducing the water permeability more than the oil permeability in subterranean reservoir.

38. Use according to claim 37, wherein the gelant concentration in the emulsion is in the range up to 50 volume%.

39. Use according to claim 37, wherein the gelant concentration in the emulsion is in the range of 5-50%.

40. Use according to any one of the previous claims 37-39, wherein the gelant emulsified in oil comprises water soluble polymers.

41. Use according to claim 40, wherein said water soluble polymers comprise polyacrylamides, polyacrylate copolymers or biopolymers.

42. Use according to any one of the previous claims 37-41, wherein the polymer concentration in the gelant emulsified in oil is present in the concentration range of from 1000 to 50000 ppm.

43. Use according to any one of the previous claims 37-42, wherein the polymer concentration in the gelant emulsified in oil is present in the concentration range of from 2000 to 10000 ppm.

44. Use according to any one of the previous claims 37-43, wherein the gelant comprises one or several crosslinking agents comprising hexamethylenetetramine and/or salicyl alcohol, and/or trivalent metal ions.

45. Use according to claim 44, wherein said trivalent metal ions are chromium or aluminium.

46. Use according to any one of the previous claims 37-45, wherein said one or several crosslinking agents are present in the range of from 50 - 5000 ppm.

47. Use according to claim 37-45, wherein said one or several crosslinking agents are present in the range of from 100-1000 ppm.

48. Use according to any one of the previous claims 37-47, wherein the emulsion is stabilised by a surfactant.

49. Use according to claim 48, wherein said surfactant is an oil soluble surfactant.

50. Use according to any one of the previous claims 48-49, wherein the surfactant is present in a concentration range of from 0.05 to 10%.

51. Use according to any one of the previous claims 48-09, wherein the surfactant is present in a concentration range of from 0.1 to 2%.

52. Use according to any one of the previous claims 37-51, wherein the emulsion breaks in 1-15 hours at a temperature of 50-130°C.

53. Use according to any one of the previous claims 37-51, wherein a gel is formed after the emulsion breaks.

## Patentansprüche

1. Zusammensetzung zur Verringerung der Wasserdurchlässigkeit mehr als der Öldurchlässigkeit in einem unterirdischen Reservoir, welche Zusammensetzung einen in Öl emulgierten wässrigen Gelbildner umfasst, wobei der wässrige Gelbildner ein Polymer und ein oder mehrere Vernetzungsmittel umfasst.

2. Zusammensetzung nach Anspruch 1, wobei die Konzentration des Gelbildners in der Emulsion im Bereich bis zu 50 Volumenprozent liegt.

3. Zusammensetzung nach Anspruch 1 oder 2, wobei die Konzentration des Gelbildners in der Emulsion im Bereich über 5 Volumenprozent liegt.

4. Zusammensetzung nach einem der vorangegangenen Ansprüche 1-3, wobei der Gelbildner wasserlösliche Polymere umfasst.

5. Zusammensetzung nach einem der vorangegangenen Ansprüche 1-4, wobei die wasserlöslichen Polymere Polyacrylamide, Polyacrylat-Copolymere oder Biopolymere umfassen.

6. Zusammensetzung nach einem der vorangegangenen Ansprüche 1-5, wobei die Polymerkonzentration in dem Gelbildner in einer ausreichenden Konzentration vorhanden ist, um nach einer Vernetzung ein stabiles Gel zu ergeben.

7. Zusammensetzung nach Anspruch 6, wobei die Polymerkonzentration in dem Gelbildner in einem Konzentrationsbereich von 1000 bis 50000 ppm vorliegt.

8. Zusammensetzung nach Anspruch 7, wobei die Polymerkonzentration in dem Gelbildner in einem Konzentrationsbereich von 2000 bis 10000 ppm vorliegt.

9. Zusammensetzung nach einem der vorangegangenen Ansprüche 1-8, wobei die Vernetzungsmittel Hexamethylentetramin und/oder Salicylalkohol und/oder dreiwertige Metallionen sind.

10. Zusammensetzung nach Anspruch 9, wobei die dreiwertigen Metallionen Chrom oder Aluminium sind.

11. Zusammensetzung nach einem der vorangegangenen Ansprüche 1-10, wobei das eine oder die mehreren Vernetzungsmittel in einem Konzentrationsbereich von 50-5000 ppm vorhanden sind.

12. Zusammensetzung nach Anspruch 11, wobei das eine oder die mehreren Vernetzungsmittel in einem Konzentrationsbereich von 100-1000 ppm vorhanden sind.

13. Zusammensetzung nach einem der vorangegangenen Ansprüche 1-12, wobei die Emulsion durch ein grenzflächenaktives Mittel stabilisiert wird.

14. Zusammensetzung nach Anspruch 13, wobei das grenzflächenaktive Mittel ein in Öl lösliches grenzflächenaktives Mittel ist.

15. Zusammensetzung nach Anspruch 13 oder 14, wobei das grenzflächenaktive Mittel in einem Konzentrationsbereich von 0,05 bis 10% vorhanden ist.

16. Zusammensetzung nach Anspruch 15, wobei das grenzflächenaktive Mittel in einem Konzentrationsbereich von 0,1 bis 2% vorhanden ist.

17. Zusammensetzung nach einem der vorangegangenen Ansprüche 1-16, wobei die Emulsion bei einer Temperatur von 50-130°C in 1-15 Stunden bricht.

18. Zusammensetzung nach einem der vorangegangenen Ansprüche 1-16, wobei ein Gel gebildet wird, nachdem die Emulsion bricht.

19. Verfahren zur Verringerung der Wasserdurchlässigkeit mehr als der Öldurchlässigkeit in einem unterirdischen Reservoir, wobei ein in Öl emulgierter wässriger Gelbildner in ein Reservoir eingespritzt wird.

20. Verfahren nach Anspruch 19, wobei die Konzentration des Gelbildners in der Emulsion im Bereich bis zu 50 Volumenprozent liegt.

21. Verfahren nach Anspruch 20, wobei die Konzentration des Gelbildners in der Emulsion im Bereich über 5 Volumenprozent liegt.

22. Verfahren nach einem der vorangegangenen Ansprüche 19-21, wobei der in Öl emulgierte Gelbildner wasserlösliche Polymere umfasst.

23. Verfahren nach Anspruch 22, wobei die wasserlöslichen Polymere Polyacrylamide, Polyacrylat-Copolymere oder Biopolymere umfassen.

24. Verfahren nach einem der vorangegangenen Ansprüche 19-23, wobei die Polymerkonzentration in dem in Öl emulgierten Gelbildner in einer ausreichenden Konzentration vorhanden ist, um nach einer Vernetzung ein stabiles Gel zu ergeben.

25. Verfahren nach Anspruch 24, wobei die Polymerkonzentration in dem in Öl emulgierten Gelbildner in einem Konzentrationsbereich von 1000 bis 50000 ppm vorliegt.

26. Verfahren nach Anspruch 24 oder 25, wobei die Polymerkonzentration in dem in Öl emulgierten Gelbildner in einem Konzentrationsbereich von 2000 bis 10000 ppm vorliegt.

27. Verfahren nach Anspruch 19-26, wobei der Gelbildner ein oder mehrere Vernetzungsmittel, umfassend Hexamethylentetramin und/oder Salicylalkohol und/oder dreiwertige Metallionen, umfasst.

28. Verfahren nach Anspruch 27, wobei die dreiwertigen Metallionen Chrom oder Aluminium sind.

29. Verfahren nach einem der vorangegangenen Ansprüche 19-28, wobei ein oder mehrere Vernetzungsmittel in einem Bereich von 50-5000 ppm vorhanden sind.

30. Verfahren nach Anspruch 28, wobei ein oder mehrere Vernetzungsmittel in einem Konzentrationsbereich von 100-1000 ppm vorhanden sind.

31. Verfahren nach Anspruch 19-30, wobei die Emulsion durch ein grenzflächenaktives Mittel stabilisiert wird.

32. Verfahren nach Anspruch 31, wobei das grenzflächenaktive Mittel ein in Öl lösliches grenzflächenaktives Mittel ist.

33. Verfahren nach einem der vorangegangenen Ansprüche 31-32, wobei das grenzflächenaktive Mittel in einem Konzentrationsbereich von 0,05 bis 10% vorhanden ist.

34. Verfahren nach Anspruch 33, wobei das grenzflächenaktive Mittel in einem Konzentrationsbereich von 0,1 bis 2% vorhanden ist.

35. Verfahren nach einem der vorangegangenen Ansprüche 19-34, wobei die Emulsion bei einer Temperatur von 50-130°C in 1-15 Stunden bricht.

36. Verfahren nach einem der vorangegangenen Ansprüche 19-34, wobei ein Gel gebildet wird, bevor die Emulsion bricht.

37. Verwendung einer Zusammensetzung, umfassend einen in Öl emulgierten wässrigen Gelbildner, für die Verringerung der Wasserdurchlässigkeit mehr als der Öldurchlässigkeit in unterirdischen Reservoiren.

38. Verwendung nach Anspruch 37, wobei die Konzentration des Gelbildners in der Emulsion im Bereich bis zu 50 Volumenprozent liegt.

39. Verwendung nach Anspruch 37, wobei die Konzentration des Gelbildners in der Emulsion im Bereich von 5-50% liegt.

40. Verwendung nach einem der vorangegangenen Ansprüche 37-39, wobei der in Öl emulgierte Gelbildner wasserlösliche Polymere umfasst.

41. Verwendung nach Anspruch 40, wobei die wasserlöslichen Polymere Polyacrylamide, Polyacrylat-Copolymere oder Biopolymere umfassen.

42. Verwendung nach einem der vorangegangenen Ansprüche 37-41, wobei die Polymerkonzentration in dem in Öl emulgierten Gelbildner in einem Konzentrationsbereich von 1000 bis 50000 ppm vorliegt.

43. Verwendung nach einem der vorangegangenen Ansprüche 37-42, wobei die Polymerkonzentration in dem in Öl emulgierten Gelbildner in einem Konzentrationsbereich von 2000 bis 10000 ppm vorliegt.

44. Verwendung nach einem der vorangegangenen Ansprüche 37-43, wobei der Gelbildner ein oder mehrere Vernetzungsmittel, umfassend Hexamethylentetramin und/oder Salicylalkohol und/oder dreiwertige Metallionen, umfasst.

45. Verwendung nach Anspruch 44, wobei die dreiwertigen Metallionen Chrom oder Aluminium sind.

46. Verwendung nach einem der vorangegangenen Ansprüche 37-45, wobei das eine oder die mehreren Vernetzungsmittel in einem Bereich von 50-5000 ppm vorhanden sind.

47. Verwendung nach Anspruch 37-45, wobei das eine oder die mehreren Vernetzungsmittel in einem Konzentrationsbereich von 100-1000 ppm vorhanden sind.

48. Verwendung nach einem der vorangegangenen Ansprüche 37-47, wobei die Emulsion durch ein grenzflächenaktives Mittel stabilisiert wird.

49. Verwendung nach Anspruch 48, wobei das grenzflächenaktive Mittel ein in Öl lösliches grenzflächenaktives Mittel ist.

50. Verwendung nach einem der vorangegangenen Ansprüche 48-49, wobei das grenzflächenaktive Mittel in einem Konzentrationsbereich von 0,05 bis 10% vorhanden ist.

51. Verwendung nach einem der vorangegangenen Ansprüche 48-49, wobei das grenzflächenaktive Mittel in einem Konzentrationsbereich von 0,1 bis 2% vorhanden ist.

52. Verwendung nach einem der vorangegangenen Ansprüche 37-51, wobei die Emulsion bei einer Temperatur von 50-130°C in 1-15 Stunden bricht.

53. Verwendung nach einem der vorangegangenen Ansprüche 37-51, wobei ein Gel gebildet wird, nachdem die Emulsion bricht.

## Revendications

1. Composition destinée à réduire la perméabilité à l'eau davantage que la perméabilité à l'huile dans un réservoir souterrain, laquelle composition comprend un gel aqueux émulsifié dans l'huile, dans laquelle ledit gel aqueux comprend un polymère et un ou plusieurs agents de réticulation.

2. Composition selon la revendication 1, dans laquelle la concentration en gel dans l'émulsion se trouve dans la plage allant jusqu'à 50 % en volume.

3. Composition selon la revendication 1 ou 2, dans laquelle la concentration en gel dans l'émulsion se trouve dans la plage supérieure à 5 % en volume.

4. Composition selon l'une quelconque des revendications précédentes 1 à 3, dans laquelle le gel comprend des polymères hydrosolubles.

5. Composition selon l'une quelconque des revendications précédentes 1 à 4, dans laquelle lesdits polymères hydrosolubles comprennent des polyacrylamides, des copolymères de polyacrylate ou des biopolymères.

6. Composition selon l'une quelconque des revendications précédentes 1 à 5, dans laquelle la concentration en polymère dans le gel est présente en une concentration suffisante pour obtenir un gel stable après la réticulation.

7. Composition selon la revendication 6, dans laquelle ladite concentration en polymère dans le gel est présente dans une plage de concentration de 1000 à 50000 ppm.

8. Composition selon la revendication 7, dans laquelle ladite concentration en polymère dans le gel est présente dans une plage de concentration de 2000 à 10000 ppm.

9. Composition selon l'une quelconque des revendications précédentes 1 à 8, dans laquelle les agents de réticulation sont l'hexaméthylènetétramine et/ou l'alcool salicylique et/ou des ions métalliques trivalents.

10. Composition selon la revendication 9, dans laquelle les ions métalliques trivalents sont le chrome ou l'aluminium.

11. Composition selon l'une quelconque des revendications précédentes 1 à 10, dans laquelle ledit un ou lesdits plusieurs agents de réticulation sont présents dans une plage de concentration comprise de 50 à 5000 ppm.

12. Composition selon la revendication 11, dans laquelle ledit un ou lesdits plusieurs agents de réticulation sont présents dans une plage de concentration de 100 à 1000 ppm.

13. Composition selon l'une quelconque des revendications précédentes 1 à 12, dans laquelle l'émulsion est stabilisée par un tensioactif.

14. Composition selon la revendication 13, dans laquelle ledit tensioactif est un tensioactif liposoluble.

15. Composition selon la revendication 13 ou 14, dans laquelle ledit tensioactif est présent dans une plage de concentration de 0,05 à 10 %.

16. Composition selon la revendication 15, dans laquelle ledit tensioactif est présent dans une plage de concentration de 0,1 à 2 %.

17. Composition selon l'une quelconque des revendications précédentes 1 à 16, dans laquelle l'émulsion se rompt en 1 à 15 heures à une température de 50 à 130°C.

18. Composition selon l'une quelconque des revendications précédentes 1 à 16, dans laquelle un gel se forme après la rupture de l'émulsion.

19. Procédé destiné à réduire la perméabilité à l'eau davantage que la perméabilité à l'huile dans un réservoir souterrain, dans lequel un gel aqueux émulsifié dans l'huile est injecté dans un réservoir.

20. Procédé selon la revendication 19, dans lequel la concentration en gel dans l'émulsion se trouve dans la plage allant jusqu'à 50 % en volume.

21. Procédé selon la revendication 20, dans lequel la concentration en gel dans l'émulsion se trouve dans la plage supérieure à 5 % en volume.

22. Procédé selon l'une quelconque des revendications précédentes 19 à 21, dans lequel le gel émulsifié dans l'huile comprend des polymères hydrosolubles.

23. Procédé selon la revendication 22, dans lequel lesdits polymères hydrosolubles comprennent des polyacrylamides, des copolymères de polyacrylate ou des biopolymères.

24. Procédé selon l'une quelconque des revendications précédentes 19 à 23, dans lequel la concentration en polymère dans le gel émulsifié dans l'huile est présente en la concentration suffisante pour obtenir un gel stable après la réticulation.

25. Procédé selon la revendication 24, dans lequel ladite concentration en polymère dans le gel émulsifié dans l'huile est présente dans la plage de concentration de 1000 à 50000 ppm.

26. Procédé selon la revendication 24 ou 25, dans lequel ladite concentration en polymère dans le gel émulsifié dans l'huile est présente dans la plage de concentration de 2000 à 10000 ppm.

27. Procédé selon les revendications 19 à 26, dans lequel ledit gel comprend un ou plusieurs agents de réticulation comprenant l'hexaméthylènetétramine et/ou l'alcool salicylique et/ou des ions métalliques trivalents.

28. Procédé selon la revendication 27, dans lequel lesdits ions métalliques trivalents sont le chrome ou l'aluminium.

29. Procédé selon l'une quelconque des revendications précédentes 19 à 28, dans lequel un ou plusieurs agents de réticulation sont présents dans la plage de 50 à 5000 ppm.

30. Procédé selon la revendication 28, dans lequel un ou plusieurs agents de réticulation sont présents dans la plage de concentration de 100 à 1000 ppm.

31. Procédé selon les revendications 19 à 30, dans lequel l'émulsion est stabilisée par un tensioactif.

32. Procédé selon la revendication 31, dans lequel ledit tensioactif est un tensioactif liposoluble.

33. Procédé selon l'une quelconque des revendications précédentes 31 à 32, dans lequel ledit tensioactif est présent dans une plage de concentration de 0,05 à 10 %.

34. Procédé selon la revendication 33, dans lequel ledit tensioactif est présent dans une plage de concentration de 0,1 à 2 %.

35. Procédé selon l'une quelconque des revendications précédentes 19 à 34, dans lequel l'émulsion se rompt en 1 à 15 heures à une température de 50 à 130°C.

36. Procédé selon l'une quelconque des revendications précédentes 19 à 34, dans lequel un gel se forme avant la rupture de l'émulsion.

37. Utilisation d'une composition comprenant un gel aqueux émulsifié dans l'huile pour réduire la perméabilité à l'eau davantage que la perméabilité à l'huile dans un réservoir souterrain.

38. Utilisation selon la revendication 37, dans laquelle la concentration en gel dans l'émulsion se trouve dans la plage allant jusqu'à 50 % en volume.

39. Utilisation selon la revendication 37, dans laquelle la concentration en gel dans l'émulsion se trouve dans la plage de 5 à 50 %.

40. Utilisation selon l'une quelconque des revendications précédentes 37 à 39, dans laquelle le gel émulsifié dans l'huile comprend des polymères hydrosolubles.

41. Utilisation selon la revendication 40, dans laquelle lesdits polymères hydrosolubles comprennent des polyacrylamides, des copolymères de polyacrylate ou des biopolymères.

42. Utilisation selon l'une quelconque des revendications précédentes 37 à 41, dans laquelle la concentration en polymère dans le gel émulsifié dans l'huile est présente dans la plage de concentration de 1000 à 50000 ppm.

43. Utilisation selon l'une quelconque des revendications précédentes 37 à 42, dans laquelle la concentration en polymère dans le gel émulsifié dans l'huile est présente dans la plage de concentration de 2000 à 10000 ppm.

44. Utilisation selon l'une quelconque des revendications précédentes 37 à 43, dans laquelle le gel comprend un ou plusieurs agents de réticulation comprenant l'hexaméthylènetétramine et/ou l'alcool salicylique et/ou des ions métalliques trivalents.

45. Utilisation selon la revendication 44, dans laquelle lesdits ions métalliques trivalents sont le chrome ou l'aluminium.

46. Utilisation selon l'une quelconque des revendications précédentes 37 à 45, dans laquelle ledit un ou lesdits plusieurs agents de réticulation sont présents dans la plage de 50 à 5000 ppm.

47. Utilisation selon les revendications 37 à 45, dans laquelle ledit un ou lesdits plusieurs agents de réticulation sont présents dans la plage de 100 à 1000 ppm.

48. Utilisation selon l'une quelconque des revendications précédentes 37 à 47, dans laquelle l'émulsion est stabilisée par un tensioactif.

49. Utilisation selon la revendication 48, dans laquelle ledit tensioactif est un tensioactif liposoluble.

50. Utilisation selon l'une quelconque des revendications précédentes 48 à 49, dans laquelle le tensioactif est présent dans une plage de concentration de 0,05 à 10 %.

51. Utilisation selon l'une quelconque des revendications précédentes 48 à 49, dans laquelle le tensioactif est présent dans une plage de concentration de 0,1 à 2 %.

52. Utilisation selon l'une quelconque des revendications précédentes 37 à 51, dans laquelle l'émulsion se rompt en 1 à 15 heures à une température de 50 à 130°C.

53. Utilisation selon l'une quelconque des revendications précédentes 37 à 51, dans laquelle un gel se forme après la rupture de l'émulsion.
